# FASCICULE DE BREVET EUROPEEN

(11) **EP 0 813 283 B1**
(45) Date de publication et mention de la délivrance du brevet: **29.09.2004**
(21) Numéro de dépôt: 97410063.8
(22) Date de dépôt: 13.06.1997
(51) Int. Cl.: H02H 3/33, H01H 83/14, H01F 38/38

(54) **Dispositif de protection différentielle immunisé contre les déclenchements intempestifs**
Gegen unbeabsichtigtes Auslösen immunisiertes Differentialschutz
Differential protection device having immunity against nuisance tripping

(30) Priorité: 14.06.1996 FR 9607648
(43) Date de publication de la demande: 17.12.1997
(73) Titulaire: Schneider Electric Industries SAS, 92500 Rueil-Malmaison (FR)
(72) Inventeur: Paupert, Marc, 38050 Grenoble Cedex 09 (FR)
(74) Mandataire: Ritzenthaler, Jacques

(56) Documents cités:
- DE-C- 639 531
- DE-C- 3 917 478
- FR-A- 2 442 525

## Description

La présente invention concerne la protection des installations électriques alimentées par des réseaux électriques alternatifs, notamment lors de l'apparition de courants de défaut à la terre.

Les dispositifs de protection connus contre les courants de défaut à la terre comportent principalement un transformateur d'intensité différentiel constitué par un tore, des enroulements primaires formés par les conducteurs actifs de l'installation et un enroulement secondaire assurant la détection de ces courants de défaut. Cet enroulement secondaire est relié à un relais à haute sensibilité qui assure le déclenchement de la serrure d'un appareil de coupure protégeant le circuit lorsque le signal secondaire dépasse un seuil prédéterminé.

Conformément aux normes, ces protections différentielles se doivent d'entraîner un déclenchement différentiel pour des courants homopolaires, de fréquence dite industrielle, et ayant une amplitude comprise entre I_{DN} (I_{DN} min = 10mA) et 500A RMS. Cependant, elles ne doivent pas entraîner de déclenchement sur des ondes de courant homopolaires parasites, en général impulsionnelles et de fréquence équivalente élevée (supérieure à quelques KHz).

On connaît un moyen permettant d'augmenter l'immunité d'un dispositif différentiel aux déclenchements intempestifs, tel que décrit dans le brevet FR 2442525, et qui consiste à utiliser un relais du type polarisé et une diode branchée aux bornes dudit relais et dont le sens de conduction correspond au sens du courant de déclenchement du relais. Dans ce cas, le seuil de conduction de la diode est réglé de manière à être très supérieur au seuil de déclenchement du relais mais inférieur à la tension secondaire fournie par les courants parasites à éliminer.

La diode, grâce à son seuil de conduction permet d'écrêter le signal secondaire et donc d'absorber une partie de l'énergie parasite (ondes impulsionnelles). Or, pour des courants homopolaires de fréquence industrielle mais de forte intensité, le tore est très saturé. Le signal, aux bornes de l'enroulement secondaire, est alors constitué par une suite d'impulsions d'amplitude élevée mais de courte durée. Dans ce cas, l'écrêtage généré par la diode ne doit pas être trop important afin qu'il subsiste une énergie suffisante pour déclencher le relais.

Les configurations actuelles permettent de garantir un déclenchement entre I_{DN} et 500 A et un non déclenchement sur des ondes impulsionnelles rapides mais d'un niveau assez faible, grâce à l'utilisation de cette diode dont les caractéristiques sont choisies de manière à ce que l'écrêtage réalisé ne soit pas trop important afin de permettre un déclenchement à 500A. Il résulte de cette limitation de l'écrêtage que le dispositif de protection différentielle est encore sujet aux déclenchements intempestifs.

La présente invention résout ce problème et propose un dispositif de protection différentielle notamment contre les courants de défaut à la terre interdisant les déclenchements intempestifs en présence de courants parasites et pour lequel on obtient un élargissement du spectre de détection.

A cet effet, la présente invention a pour objet un dispositif de protection différentielle d'une installation électrique, du genre comprenant un transformateur différentiel comportant un tore, des enroulements primaires, et un enroulement secondaire aux bornes duquel s'établit un signal de défaut différentiel lors de l'apparition d'un défaut dans les enroulements primaires, un moyen de déclenchement d'un appareil de coupure du courant tel un relais, un circuit secondaire de connexion dudit relais aux bornes de l'enroulement secondaire précité, ledit circuit étant agencé pour provoquer le déclenchement lorsque ledit signal dépasse un seuil prédéterminé et comportant un moyen d'écrêtage dudit signal destiné à éviter les déclenchements intempestifs en cas de pointes de tension parasite tout en assurant un déclenchement pour un courant de défaut, ce dispositif étant caractérisé en ce que le tore du transformateur précité comprend au moins deux parties présentant des caractéristiques magnétiques différentes, à savoir une première partie présentant une perméabilité élevée fournissant au relais précité une énergie suffisante pour déclencher sur de faibles intensités de courant secondaire, sur lesquelles un écrêtage important pourra être réalisé et une seconde partie présentant une basse perméabilité, fournissant au relais une énergie suffisante pour déclencher sur de forts courants.

Selon une caractéristique particulière, la seconde partie précitée est réalisée en un matériau présentant des pertes fer élevées.

Selon une autre caractéristique, la seconde partie précitée, est réalisée en un matériau présentant une haute induction à saturation.

Selon une autre caractéristique, la perméabilité associée au matériau de la première partie est comprise entre 10 000 et 1 million tandis que la perméabilité associée au matériau de la seconde partie est comprise entre 10 et 5000.

Avantageusement, la perméabilité associée au matériau de la première partie est d'environ 350 000.

Avantageusement, la perméabilité associée au matériau de la seconde partie est d'environ 500.

Selon une autre caractéristique, les deux parties précitées comprennent respectivement deux portions toroïdales axialement juxtaposées,

Selon une autre caractéristique, les deux portions toroïdales comprennent respectivement un tore enroulé réalisé en FeNi feuilleté et une rondelle en Fe.

Selon une autre réalisation, les deux parties précitées comprennent respectivement un tore enroulé réalisé en FeNi feuilleté et un boîtier de protection métallique de ce tore.

Selon une réalisation particulière, le moyen de déclenchement comprend un relais polarisé et le moyen d'écrêtage comprend une diode branchée aux borne du relais et dont le sens de conduction correspond au sens du courant de déclenchement du relais, le seuil de conduction de la diode étant choisi de manière à être supérieur au seuil de déclenchement du relais mais inférieur à la tension secondaire fournie par les courants parasites.

Selon une variante de la réalisation, le moyen de déclenchement comprend un relais non polarisé et le moyen d'écrêtage comprend deux diodes montées en sens inverse aux bornes dudit relais.

Mais d'autres avantages de l'invention apparaîtront mieux dans la description détaillée qui suit et se réfère aux dessins annexés donnés uniquement à titre d'exemple et dans lesquels :
- La figure 1 représente le schéma électrique d'un appareil de protection différentielle conforme à une réalisation particulière de l'invention,
- La figure 2 est une vue en coupe radiale, illustrant un tore bi-matière destiné à être utilisé dans un appareil de protection différentiel conforme à l'invention,
- La figure 3 illustre deux courbes représentant en ordonnée, l'amplitude d'induction et en abscisse l'amplitude de l'intensité de champs, et correspondant respectivement aux deux matériaux constituant le tore de l'invention.
- La figure 4 illustre deux courbes représentant en ordonnée, la puissance fournie par le tore, et en abscisse, l'intensité du courant du signal secondaire, et correspondant respectivement aux deux portions de tore présentant des caractéristiques magnétiques différentes.
- La figure 5 représente le schéma électrique d'un appareil de protection différentielle conforme à une seconde réalisation de l'invention.

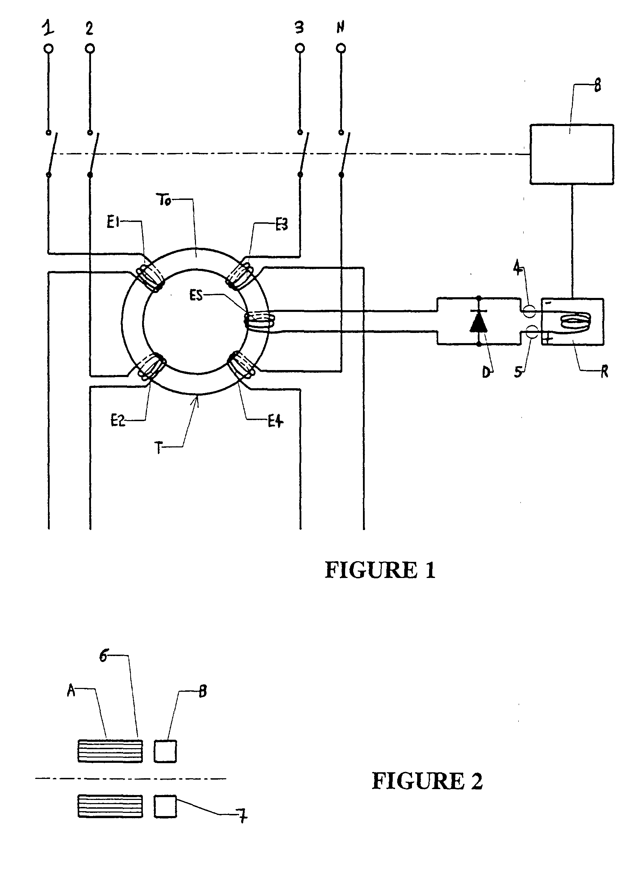

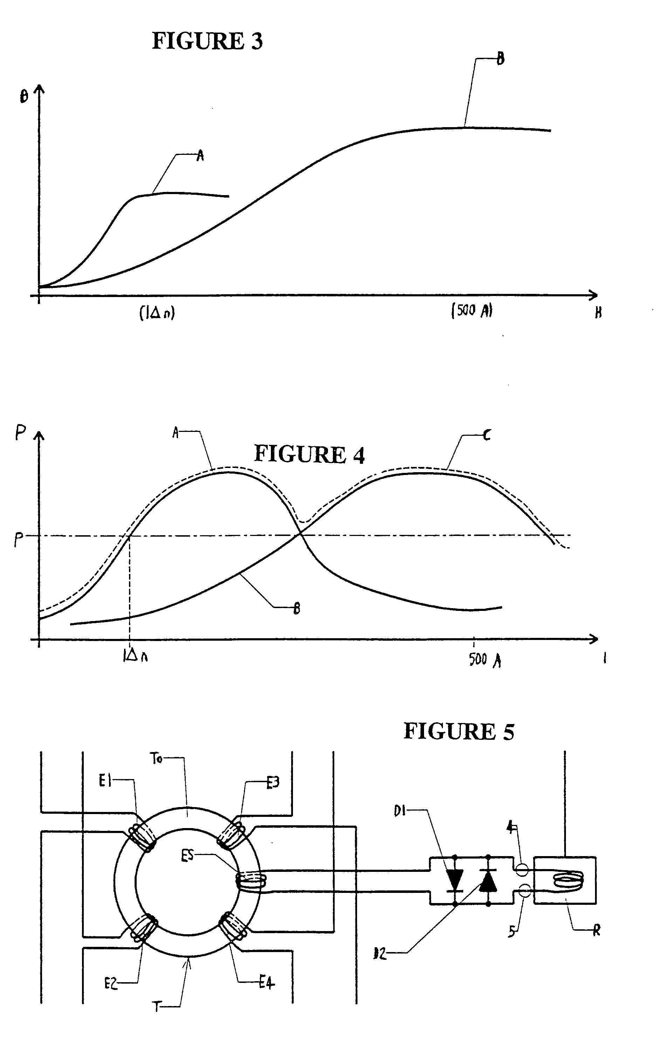

Sur les figures 1 et 5, on voit un dispositif de protection différentielle conforme à l'invention comportant un transformateur différentiel T comprenant un tore magnétique To portant quatre enroulements primaires E1, E2, E3 et E4 intercalés dans les conducteurs de phases 1, 2, 3 et le conducteur de neutre N, et un enroulement secondaire ES relié à la bobine d'un relais sensible polarisé ou non R de déclenchement d'un disjoncteur.

Selon la première réalisation illustrée sur la figure 1, une diode D est branchée en parallèle avec l'enroulement secondaire ES du tore To, aux bornes d'entrée 4, 5 du relais polarisé R, dans le sens opposé au sens du champ magnétique de collage du relais R. La mise en parallèle de la diode D avec le relais R a pour effet de court-circuiter ce dernier lorsque la tension secondaire dépasse le seuil de conduction de la diode D, de sorte que le fonctionnement du relais R ne peut être assuré. On utilise donc une diode D dont le seuil de conduction est supérieur à la tension normale de déclenchement du relais R. Le relais R est un relais polarisé dont le fonctionnement n'est assuré qu'une alternance sur deux, une seule diode étant prévue pour assurer la prévention contre les déclenchements intempestifs. Le sens de conduction de la diode D est celui correspondant au passage du courant de déclenchement du relais, l'alternance inverse n'ayant aucune action sur le déclenchement du relais R.

En se reportant à la figure 2, on voit que le tore du transformateur T est constitué par deux portions toroïdales A, B, axialement juxtaposées. Avantageusement, d'un point de vue économique, ces deux portions A, B comprennent respectivement un tore enroulé 6 d'une épaisseur d'environ 15 à 300µm réalisé en FeNi ou manocristallin feuilleté et une rondelle massive 7 réalisée en Fe d'une épaisseur de 1 à 2 mm. La première portion 6 réalisée en FeNi présente une perméabilité µ élevée, avantageusement de 350 000, tandis que la seconde partie 7, réalisée en Fer, présente une basse perméabilité, avantageusement de 500 (Bs ≅ 2T). Il est à noter que ces valeurs sont données pour une valeur de I_{DN} voisine de 30mA;

En fonctionnement normal, la somme des courants primaires traversant le transformateur différentiel T est nulle. Dans le cas d'une fuite à la terre, cette somme ne s'annule plus, et elle engendre par induction magnétique un courant dans le secondaire Es du transformateur T qui provoque, par l'intermédiaire du relais à haute sensibilité R, l'ouverture du dispositif de coupure 8.

En se reportant à la figure 3, on voit que pour ce qui concerne la première portion de tore A, l'amplitude d'induction B en fonction de l'amplitude de l'intensité de champ H est maximale, pour une valeur de courant de I_{DN} (correspondant à quelques dizaines ou centaines de mA). Pour ce qui concerne la seconde portion de tore B, cette amplitude B est maximale pour une valeur de courant de 500A.

En se reportant à la figure 4, on voit que la puissance P fournie par la première portion de tore A est supérieure à la puissance de déclenchement p du relais R pour de faibles valeurs d'intensité de courant, et ce sensiblement à partir de I_{DN}, tandis que la puissance P fournie par la seconde portion de tore B est supérieure à cette puissance de déclenchement p pour des valeurs élevées d'intensité autour de 500A, notamment au-dessus de cette valeur. On voit également sur cette figure la courbe (C) représentative de la puissance totale fournie par le transformateur constitué par les deux tores A, B.

Ainsi compte tenu de la haute perméabilité du matériau constituant la première portion de tore A, une énergie suffisante est produite pour de faibles valeurs d'intensité de courant homopolaire (Zone des I_{DN}), d'où il résulte qu'un écrêtage très important pourra être réalisé afin d'empêcher le déclenchement sur des défauts parasites impulsionnels. Cet écrêtage important n'assurera pas le déclenchement sur des courants homopolaires de fréquence industrielle mais de forte intensité, lequel sera obtenu grâce à la présence de la seconde portion de tore B à basse perméabilité.

On notera que le matériau de la seconde portion de tore sera avantageusement un matériau à fortes pertes fer de manière à empêcher le déclenchement sur parasites haute fréquence, l'écrêteur étant alors inopérant compte tenu de la faible valeur de tension délivrée à ses bornes. De préférence également, ce même matériau présentera une haute induction à saturation, permettant de réduire l'encombrement du transformateur T.

En se reportant à la figure 5, on voit une autre réalisation de l'invention dans laquelle le dispositif de protection est de type classe A, c'est à dire sensible aux courants pulsés. Dans ce cas, le relais de déclenchement R1 est non polarisé et l'écrêtage est réalisé par deux diodes, D1, D2 montées en sens inverse entre le secondaire Es du transformateur T et le relais R.

On notera que d'autres matériaux pourront être utilisés pour réaliser le tore de l'invention, tels que du FeSi, au bien des matériaux manocristallins voire amorphes.

On notera également que le circuit de liaison entre l'enroulement secondaire et le relais, pourra comporter un circuit à accumulation ou bien un circuit redresseur accordé.

On a donc réalisé grâce à l'invention un dispositif de protection différentielle présentant une immunité aux déclenchements intempestifs considérablement améliorée. Cette amélioration est principalement due au fait qu'il est réalisé un écrêtage plus énergique du signal secondaire dans la zone des faibles courants, ceci étant rendu possible grâce à la présence d'un tore ayant deux caractéristiques magnétiques différentes. On obtient en outre, grâce à l'invention, une plage élargie d'intensité de courant de déclenchement.

Bien entendu, l'invention n'est pas limitée aux modes de réalisation décrits et illustrés qui n'ont été donnés qu'à titre d'exemple.

Ainsi, l'invention pourra être appliquée à tout dispositif différentiel (interrupteur différentiel, disjoncteur différentiel etc) utilisant un tore de mesures.

Le système écrêteur pourra comporter par exemple une ou deux diodes Zener ou un autre composant non linéaire.

## Revendications

1. Dispositif de protection différentielle d'une installation électrique, du genre comprenant un transformateur différentiel comportant un tore (T), des enroulements primaires (E1,E2,E3,E4), et un enroulement secondaire (ES) aux bornes duquel s'établit un signal de défaut différentiel lors de l'apparition d'un défaut dans les enroulements primaires, un moyen de déclenchement d'un appareil de coupure (8) du courant tel un relais (R), un circuit secondaire de connexion dudit relais aux bornes de l'enroulement secondaire précité, ledit circuit étant agencé pour provoquer le déclenchement lorsque ledit signal dépasse un seuil prédéterminé et comportant un moyen d'écrêtage (D,D1,D2) dudit signal destiné à éviter les déclenchements intempestifs en cas de pointes de tension parasite tout en assurant un déclenchement pour un courant de défaut,
**caractérisé en ce que** le tore To du transformateur précité T comprend au moins deux parties A, B présentant des caractéristiques magnétiques différentes, à savoir une première partie A présentant une perméabilité élevée fournissant au relais précité R une énergie suffisante pour déclencher sur de faibles intensités de courant secondaire, sur lesquelles un écrêtage important pourra être réalisé, et une seconde partie B présentant une basse perméabilité, fournissant au relais R une énergie suffisante pour déclencher sur de forts courants.

2. Dispositif selon la revendications 1, **caractérisé en ce que** la seconde partie précitée B est réalisée en un matériau présentant des pertes fer élevées.

3. Dispositif selon la revendication 1 ou 2, **caractérisé en ce que** la seconde partie précitée B est réalisée en un matériau présentant une haute induction à saturation.

4. Dispositif selon l'une quelconque des revendications précédentes, **caractérisé en ce que** la perméabilité associée au matériau de la première partie A est comprise entre 10 000 et 1 million tandis que la perméabilité associée au matériau de la seconde partie B est comprise entre 10 et 5000.

5. Dispositif selon l'une quelconque des revendications précédentes, **caractérisé en ce que** la perméabilité associée au matériau de la première partie A est d'environ 350 000.

6. Dispositif selon l'une quelconque des revendications précédentes, **caractérisé en ce que** la perméabilité associée au matériau de la seconde partie B est d'environ 500.

7. Dispositif selon l'une quelconque des revendications précédentes, **caractérisé en ce que** les deux parties précitées A, B, comprennent respectivement deux portions toroïdales (6, 7) axialement juxtaposées.

8. Dispositif selon la revendication 7, **caractérisé en ce que** les deux portions toroïdales (6, 7) comprennent respectivement un tore enroulé (6) réalisé en FeNi feuilleté et une rondelle en Fe (7).

9. Dispositif selon l'une quelconque des revendications 1 à 6, **caractérisé en ce que** les deux parties précitées A, B comprennent respectivement un tore enroulé (6) réalisé en FeNi feuilleté et un boîtier de protection métallique de ce tore (6).

10. Dispositif selon l'une quelconque des revendications précédentes, **caractérisé en ce que** le moyen de déclenchement comprend un relais polarisé R et **en ce que** le moyen d'écrêtage comprend une diode D branchée aux bornes (4, 5) du relais R et dont le sens de conduction correspond au sens du courant de déclenchement du relais R, le seuil de conduction de la diode D étant choisi de manière à être supérieur au seuil de déclenchement du relais R mais inférieur à la tension secondaire fournie par les courants parasites.

11. Dispositif selon l'une quelconque des revendications 1 à 9, **caractérisé en ce que** le moyen de déclenchement comprend un relais non polarisé R1 et **en ce que** le moyen d'écrêtage comprend deux diodes (D1, D2) montées en sens inverse aux bornes dudit relais R1.

## Patentansprüche

1. Differenzstromschutzeinrichtung für eine elektrische Installation, die gattungsgemäß einen Differenzstromwandler mit einem Ringkern (T), Primärwicklungen (E1, E2, E3, E4) und einer Sekundärwicklung (ES), an deren Klemmen bei Auftreten eines Fehlers in den Primärwicklungen ein Differenzfehlersignal anliegt, ein Auslösemittel zur Ansteuerung eines den Strom abschaltenden Schaltgeräts (8), wie z.B. ein Relais, und eine Sekundärkreisschaltung zur Verbindung des genannten Relais' mit den genannten Klemmen der Sekundärwicklung umfaßt, wobei die genannte Schaltung so ausgelegt ist, daß sie die Auslösung bewirkt, wenn das genannte Signal einen bestimmten Schwellwert überschreitet, und ein Mittel (D, D1, D2) zur Begrenzung des genannten Signals umfaßt, das dazu dient, Fehlauslösungen durch Störspannungsspitzen zu verhindern, jedoch gleichzeitig eine Auslösung bei Auftreten eines Fehlerstroms gewährleistet,
**dadurch gekennzeichnet, daß** der Ringkern To des genannten Stromwandlers T mindestens zwei Abschnitte A, B mit unterschiedlichen magnetischen Eigenschaften umfaßt, und zwar einen ersten Abschnitt A mit hoher Permeabilität, der eine ausreichend hohe Energie an das Relais R liefert, um eine Auslösung bei kleinen Sekundärströmen zu bewirken, die stark begrenzt werden können, sowie einen zweiten Abschnitt B mit niedriger Permeabilität, der eine ausreichende Energie an das Relais R liefert, um eine Auslösung bei hohen Strömen zu bewirken.

2. Einrichtung nach Anspruch 1, **dadurch gekennzeichnet, daß** der genannte zweite Abschnitt B aus einem Material mit hohen Eisenverlusten besteht.

3. Einrichtung nach Anspruch 1 oder 2, **dadurch gekennzeichnet, daß** der genannte zweite Abschnitt B aus einem Material mit hoher Sättigungsinduktivität besteht.

4. Einrichtung nach irgendeinem der vorhergehenden Ansprüche, **dadurch gekennzeichnet, daß** die dem Material des ersten Abschnitts A zugeordnete Permeabilität zwischen 10.000 und 1 Million liegt, während die dem Material des zweiten Abschnitts B zugeordnete Permeabilität zwischen 10 und 5.000 beträgt.

5. Einrichtung nach irgendeinem der vorhergehenden Ansprüche, **dadurch gekennzeichnet, daß** die dem Material des ersten Abschnitts A zugeordnete Permeabilität etwa 350.000 beträgt.

6. Einrichtung nach irgendeinem der vorhergehenden Ansprüche, **dadurch gekennzeichnet, daß** die dem Material des zweiten Abschnitts B zugeordnete Permeabilität etwa 500 beträgt.

7. Einrichtung nach irgendeinem der vorhergehenden Ansprüche, **dadurch gekennzeichnet, daß** die beiden genannten Abschnitte A, B jeweils zwei axial übereinander angeordnete Ringsegmente (6, 7) umfassen.

8. Einrichtung nach Anspruch 7, **dadurch gekennzeichnet, daß** die beiden Ringsegmente (6, 7) einen Wickelring (6) aus geblechtem FeNi bzw. eine Scheibe aus Fe (7) umfassen.

9. Einrichtung nach irgendeinem der Ansprüche 1 bis 6, **dadurch gekennzeichnet, daß** die beiden genannten Abschnitte A, B einen Wickelring (6) aus geblechtem FeNi bzw. ein Schutzgehäuse aus Metall für diesen Ring (6) umfassen.

10. Einrichtung nach irgendeinem der vorhergehenden Ansprüche, **dadurch gekennzeichnet, daß** das Auslösemittel ein polarisiertes Relais R umfaßt und das Begrenzungsmittel eine an die Klemmen (4, 5) des Relais' R angeschlossene Diode D umfaßt, deren Durchlaßrichtung der Richtung des Auslösestroms des Relais' R entspricht, wobei die Durchschaltschwelle der Diode D so gewählt ist, daß sie über dem Auslöseschwellwert des Relais' R jedoch unter der durch die Störströme erzeugten Sekundärspannung liegt.

11. Einrichtung nach irgendeinem der Ansprüche 1 bis 9, **dadurch gekennzeichnet, daß** das Auslösemittel ein unpolarisiertes Relais R1 umfaßt und das Begrenzungsmittel zwei Dioden (D1, D2) umfaßt, die mit entgegengesetzter Polung an die Klemmen des genannten Relais' R1 angeschlossen sind.

## Claims

1. A differential protection device for protection of an electrical installation, of the kind comprising a differential transformer comprising a toroid (T), primary windings (E1, E2, E3, E4), and a secondary winding (ES) at the terminals whereof a differential fault signal is established when a fault occurs in the primary windings, a tripping means of a current breaking apparatus (8) such as a relay (R), a secondary circuit for connecting said relay to the terminals of the above-mentioned secondary winding, said circuit being arranged to cause tripping when said signal exceeds a preset threshold and comprising a clipping means (D, D1, D2) for clipping said signal designed to prevent spurious tripping in the event of stray voltage peaks while performing tripping for a fault current, **characterized in that** the toroid To of the above-mentioned transformer T comprises at least two parts A, B presenting different magnetic characteristics, i.e. a first part A presenting a high permeability supplying sufficient energy to the above-mentioned relay R to trip on low secondary current intensities on which a high clipping will be able to be performed, and a second part B presenting a low permeability supplying sufficient energy to the relay R to trip on strong currents

2. Device according to claim 1, **characterized in that** the above-mentioned second part B is made from a material presenting high iron losses.

3. Device according to claim 1 or 2, **characterized in that** the above-mentioned second part B is made from a material presenting a high saturation induction.

4. Device according to any one of the foregoing claims, **characterized in that** the permeability associated to the material of the first part A is comprised between 10,000 and 1 million whereas the permeability associated to the material of the second part B is comprised between 10 and 5,000.

5. Device according to any one of the foregoing claims, **characterized in that** the permeability associated to the material of the first part A is about 350,000.

6. Device according to any one of the foregoing claims, **characterized in that** the permeability associated to the material of the second part B is about 500.

7. Device according to any one of the foregoing claims, **characterized in that** the above-mentioned two parts A, B respectively comprise two axially juxtaposed toroidal portions (6, 7).

8. Device according to claim 7, **characterized in that** the two toroidal portions (6, 7) respectively comprise a wound toroid (6) made of foliated FeNi and a Fe washer (7).

9. Device according to any one of the claims 1 to 6, **characterized in that** the above-mentioned two parts A, B respectively comprise a wound toroid (6) made of foliated FeNi and a metal case protecting this toroid (6).

10. Device according to any one of the foregoing claims, **characterized in that** the tripping means comprise a polarised relay R and that the clipping means comprise a diode D connected to the terminals (4, 5) of the relay R, the direction of conduction of which diode corresponds to the direction of the tripping current of the relay R, the conduction threshold of the diode D being chosen so as to be higher than the tripping threshold of the relay R but lower than the secondary voltage supplied by the stray currents.

11. Device according to any one of the claims 1 to 9, **characterized in that** the tripping means comprise a non-polarised relay R1 and that the clipping means comprise two diodes (D1, D2) mounted in reverse direction on the terminals of said relay R1.
